Europäisches Patentamt

European Patent Office

Office européen des brevets

(19)

(11) Numéro de publication : **0 012 089**
**B1**

(12) FASCICULE DE BREVET EUROPÉEN

(45) Date de publication du fascicule du brevet :
16.02.83

(21) Numéro de dépôt : 79400945.6

(22) Date de dépôt : 03.12.79

(51) Int. Cl.³ : **C 14 B  1/24, C 14 C  15/00**

(54) **Machine pour épiler la peau d'animaux d'abattoirs.**

(30) Priorité : 04.12.78 FR 7834721

(43) Date de publication de la demande :
11.06.80 Bulletin 80/12

(45) Mention de la délivrance du brevet :
16.02.83 Bulletin 83/07

(84) Etats contractants désignés :
**BE DE GB IT NL SE**

(56) Documents cités :
**DE A 1 507 912**
**GB A 590 986**
**US A 3 457 742**

(73) Titulaire : **Tournier, Claude**
**Lioujas**
**F-12000 Rodez (FR)**

(72) Inventeur : **Tournier, Claude**
**Lioujas**
**F-12000 Rodez (FR)**

(74) Mandataire : **Lemoine, Michel et al**
**Cabinet Michel Lemoine 13 Boulevard des Batignolles**
**F-75008 Paris (FR)**

Jouve, 18, rue St-Denis, 75001 Paris, France

Machine pour épiler la peau d'animaux d'abattoirs.

La présente invention concerne une machine pour épiler les animaux et elle s'applique plus particulièrement au traitement extérieur de la peau d'ongulés préalablement désossés.

On connaît d'après la DE-A-1.507.912 des machines à épiler comprenant une cuve ouverte vers le haut avec un plateau horizontal disposé dans la partie inférieure de la cuve et entraîné rotativement sur un pivot central par des moyens appropriés, et un cylindre perforé fixe définissant avec la paroi interne de la cuve un espace coronaire qui assure l'évacuation des poils arrachés, projetés par la force centrifuge dans les ouvertures dudit cylindre. Les perforations du cylindre fixe possèdent des arêtes vives et le plateau rotatif à la partie inférieure du cylindre est muni de nervures permettant l'entraînement des parties animales et leur projection vers ledit cylindre pour l'épilage. Il en résulte que, pour une vitesse de rotation déterminée du plateau, le frottement entre lesdites parties et la paroi perforée, munie d'arêtes, du cylindre s'effectue à une vitesse moyenne fonction de la vitesse de rotation et l'on constate que, dans la pratique, l'épilage de parties dures, telles que des pieds de bovins, ne s'effectue pas de façon optimale. De plus, il subsiste des risques de dilacération aux vitesses relativement importantes qui permettraient d'aboutir à une plus grande efficacité.

On connaît également à ce jour des machines décrites dans le certificat d'addition français n° 2.112.689 et constituées d'une cuve ouverte vers le haut pour introduire les pièces à épiler préalablement échaudées et d'un plateau horizontal perforé, disposé dans la partie basse de la cuve et entraîné sur un pivot central par des moyens de rotation appropriés. L'intérieur de la cuve présente des bossages librement répartis sur sa paroie interne et sur le dessus du plateau rotatif pour brasser un mélange de pieds et/ou de têtes d'ongulés déjà échaudés, et d'éléments racleurs libres constitués par exemple par les sabots des animaux.

Cependant, une telle machine présente des inconvénients. Les corps à épiler doivent nécessairement offrir une bonne rigidité pour permettre le raclage des sabots ou autres éléments sur le pelage de la peau, ce qui nuit considérablement au rendement de la machine puisque le tissu osseux occupe une place prédominante dans les pieds et les têtes d'ongulés. Le rendement de la machine est également freiné par la présence des éléments racleurs. De plus, lorsque l'épilage est fini, il est nécessaire de trier les éléments racleurs et les pièces traitées à des fins d'utilisation propres à chacun.

La présente invention a pour but d'obvier à ces inconvénients et d'obtenir une machine dépourvue d'éléments racleurs ou de nervures internes et qui permette d'obtenir un épilage complet pour des parties d'animaux très différentes et ceci sans risque de dilacération de ces parties.

L'invention a donc pour objet une machine pour enlever les poils de la peau d'animaux, comprenant une cuve ouverte vers le haut avec un plateau horizontal disposé dans la partie inférieure de la cuve et entraîné rotativement sur un pivot central par des moyens appropriés, et un cylindre perforé fixe définissant, avec la paroi interne de la cuve, un espace coronaire qui assure l'évacuation des poils arrachés et projetés par la force centrifuge dans les ouvertures dudit cylindre, caractérisée en ce que le susdit plateau est pourvu, sur sa surface en contact avec la matière à traiter, de perforations entourées d'arêtes vides dessinées sur le contour desdites perforations, et que ledit cylindre perforé fixe est muni de perforations simples sans arête.

D'autres caractéristiques et avantages de la présente invention ressortiront à la lecture de la description qui suit, donnant, à titre d'exemple non limitatif et en regard des dessins annexés, divers modes d'exécution d'une machine conformément à l'invention.

Sur ces dessins :

La figure 1 est une vue en perspective d'un premier mode de réalisation d'une machine conforme à l'invention ;

La figure 2 est une vue en coupe verticale de la machine de la figure 1 ;

La figure 3 est une vue en perspective d'un autre mode de réalisation d'une machine conforme à l'invention.

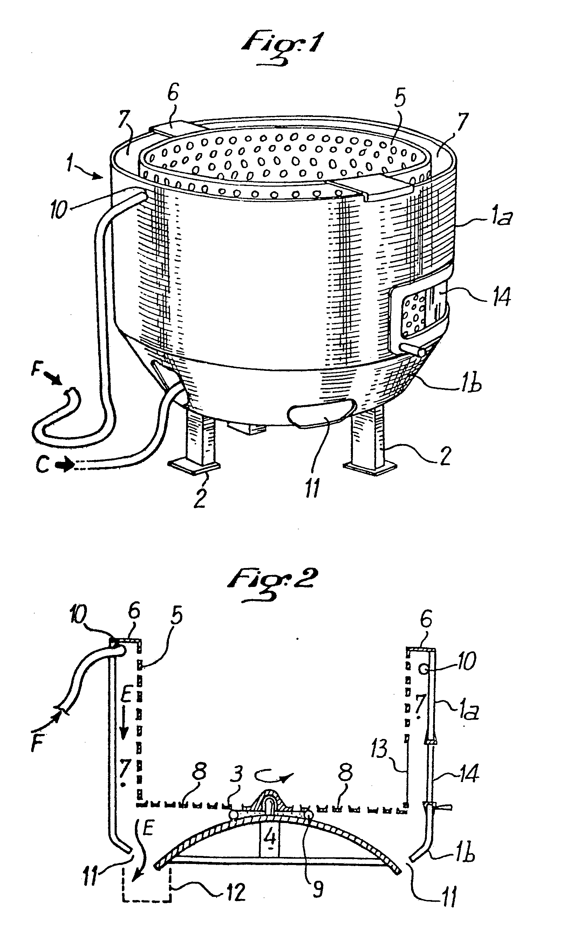

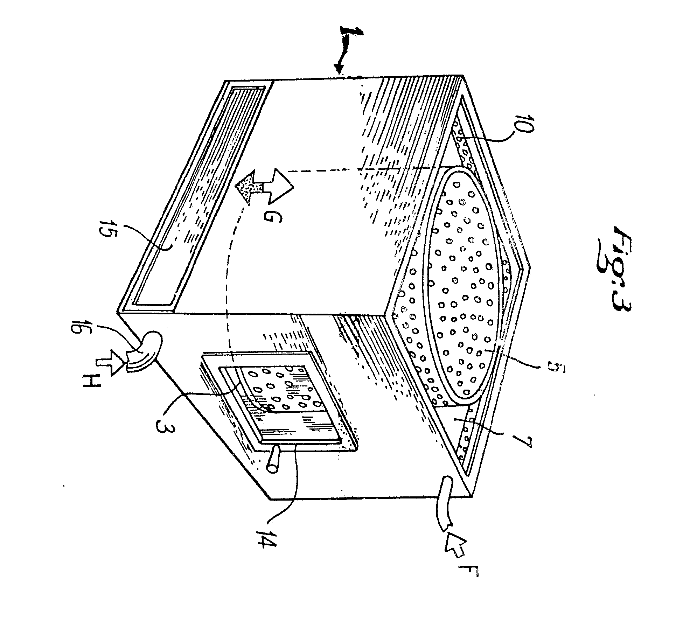

La machine représentée sur l'ensemble des figures 1 et 2 comprend une cuve 1 dont la partie supérieure 1a est cylindrique et ouverte vers le haut alors que la partie inférieure 1b est légèrement conique et assure l'assise de l'ensemble de la cuve au moyen de pieds de fixation 2.

Dans la partie cylindrique 1a, à la limite supérieure de la partie 1b, est installé un plateau horizontal perforé 3, de préférence circulaire et monté rotatif sur un pivot central 4 par des moyens d'entraînement connus et non représentés sur les figures. Citons, pour exemple, l'entraînement par courroie qui sera le plus adapté à ce genre de machines en raison de la puissance demandée.

Ce plateau 3 est surmonté périphériquement d'un cylindre 5 également perforé et maintenu au moyen de pattes de fixation 6 à la partie 1a de la cuve avec laquelle il détermine un espace coronaire vide 7.

Selon une caractéristique essentielle de l'invention, les perforations du plateau 3 sont munies d'arêtes vives 8 offrant sur sa surface un aspect rugueux qui assure le raclage des poils sur la peau. Bien évidemment, les deux surfaces du plateau 3 peuvent présenter le même aspect, ce qui permet de retourner le plateau lorsque les arêtes de l'une des faces sont usées.

La partie conique 1b est renflée intérieurement vers le milieu et une rampe de lavage 9 alimentée en eau (flèche C) est disposée autour du pivot central 4 de sorte que l'eau s'écoulant sur la partie galbée entraîne les poils s'introduisant par les perforations dudit plateau. La partie 1a, quant à elle, est munie d'une autre arrivée d'eau 10 (flèche F) définissant une rampe sur le bord intérieur de la cuve et destinée à entraîner les poils dispersés dans l'espace 7 vers la partie conique 1b et plus particulièrement vers des fenêtres 11 pratiquées dans cette dernière pour assurer, comme l'indiquent les flèches E, l'évacuation de cette eau et des poils dans des bacs de récupération 12, constitués, par exemple, de paniers percés pour retenir les poils.

De plus, on notera que le cylindre 5 et la paroi 1a de la cuve sont avantageusement pourvus chacun d'une porte, respectivement 13 et 14, ayant pour rôle de permettre l'enlèvement, en fin d'opération, de l'amas de peaux épilées restant sur le plateau 3.

Le fonctionnement de cette machine est le suivant :

1) On introduit les lambeaux de peau échaudés à l'intérieur du cylindre 5, sur le plateau 3, puis on referme la cuve 1 au moyen d'un couvercle approprié pour éviter d'éventuelles projections.

2) On alimente les rampes 9 et 10 et on provoque la mise en rotation du plateau 3. On comprend alors que les poils arrachés sur les arêtes 8 sont projetés par la force centrifuge du plateau par les ouvertures du cylindre 5 dans l'espace 7, puis sont entraînés, comme le montrent les flèches E, vers les bacs de récupération 12.

3) On ouvre les portes 13 et 14 pour enlever les peaux dépilées, accumulées en fin d'opération sur le plateau 3.

La figure 3 illustre un autre mode de réalisation d'une machine conforme à l'invention.

On reconnaît sur le dessin porté par cette figure :
— la cuve 1, de forme carrée ;
— le plateau horizontal circulaire et perforé 3 ;
— le cylindre perforé et fixe 5 ;
— l'espèce vide 7 délimité par la paroi de la cuve 1 et par le cylindre 5 ;
— la rampe de lavage intérieure 10 épousant la forme carrée de la cuve.

On notera que le bas de la cuve 1 est coupé selon un plan oblique, destiné à faciliter l'écoulement de l'eau vers une ouverture pratiquée sur l'un des côtés de la cuve et obturée hermétiquement par un volet 15 pouvant coulisser sur ladite ouverture, comme l'indique la flèche G.

De plus, cette cuve est munie d'une arrivée d'eau chaude 16 (flèche H), destinée à permettre l'échaudage préalable des peaux dans la cuve 1.

Le fonctionnement d'une telle machine est le suivant :

1) On dispose les lambeaux de peau sur le plateau 3.

2) On remplit d'eau très chaude la cuve 1 en ouvrant l'arrivée 16 et on met en rotation le plateau 3 de sorte que la cuve 1 assure le rôle de « pétrin ».

3) On actionne le volet 15 pour dégager l'ouverture obturée afin d'évacuer l'eau chaude, puis on met en service la rampe 10 tout en augmentant la vitesse de rotation du plateau 3 pour parfaire l'épilage des peaux venant d'être échaudées.

4) On récupère les peaux épilées en ouvrant la porte 14 et la porte découpée dans la paroi perforée du cylindre 5.

A titre d'exemple, les perforations du plateau 3 sont de préférence de forme circulaire, avec un diamètre compris entre 20 et 35 mm et de préférence de l'ordre de 28 mm. La hauteur de l'arête vive 8 par rapport à la face supérieure du plateau est de l'ordre de 2 mm.

De préférence, le plateau 3 a un diamètre compris entre 1 et 1,3 m et, dans ce cas, la vitesse de rotation est comprise entre 300 et 450 tours/mn.

**Revendications**

1. Machine pour enlever les poils de la peau d'animaux, comprenant une cuve (1) ouverte vers le haut avec un plateau (3) horizontal disposé dans la partie inférieure de la cuve et entraîné rotativement sur un pivot (4) central par des moyens appropriés, et un cylindre (5) perforé fixe définissant avec la paroi interne de la cuve un espace coronaire qui assure l'évacuation des poils arrachés et projetés par la force centrifuge dans les ouvertures dudit cylindre, caractérisé en ce que le susdit plateau (3) est pourvu, sur sa surface en contact avec la matière à traiter, de perforations entourées d'arêtes vives (8) dessinées sur le contour desdites perforations, et que ledit cylindre perforé fixe (5) est muni de perforations simples sans arête.

2. Machine selon la revendication 1, caractérisée en ce qu'une rampe de lavage (10) garnit le bord intérieur supérieur de ladite cuve (1).

3. Machine selon l'une des revendications 1 et 2, caractérisée en ce que la cuve (1) et le susdit cylindre perforé (5) sont munis d'une porte (13, 14) située à hauteur du plateau rotatif (3).

4. Machine selon l'une quelconque des revendications 1 à 3, caractérisée en ce que la susdite cuve (1) a la forme d'un parallélépipède tronqué à sa base selon un plan oblique.

5. Machine selon l'une quelconque des revendications 1 à 3, caractérisée en ce que la susdite cuve (1) est un cylindre dont la base (1b) de forme conique détermine un conduit périphérique dans lequel est ménagée au moins une fenêtre (11) ouverte vers le bas.

6. Machine selon l'une quelconque des revendications 1 à 4, caractérisée en ce que ladite cuve (1) est munie d'une arrivée d'eau chaude (16).

7. Machine selon l'ensemble des revendications 1 à 4 et 6, caractérisée en ce que le bas de la cuve (1) est ouvert pour assurer la vidange de celle-ci.

8. Machine selon l'ensemble des revendications 1 à 3 et 5, caractérisée en ce que le fond de la cuve (1) est galbé.

9. Machine selon la revendication 8, caractérisée en ce que la partie supérieure du galbe est munie d'une rampe de lavage (9) disposée autour du pivot central (4).

10. Machine selon l'une quelconque des revendications 1 à 9, caractérisée en ce que le diamètre des perforations du plateau (3) est compris entre 20 et 35 mm.

11. Machine selon l'une quelconque des revendications 1 à 10, caractérisée en ce que la hauteur des arêtes vives (8) est de l'ordre de 2 mm.

## Claims

1. A machine for removing the hair from the skin of animals, comprising a tank (1) open at the top with a horizontal tray (3) arranged in the lower portion of the tank and driven in rotation about a central pivot (4) by suitable means, and a fixed perforated cylinder (5) which defines with the inner wall of the tank a gap like a crown, which ensures the discharge of the hair which has been plucked off and thrown by centrifugal force into the openings in the said cylinder, characterized in that the aforesaid tray (3) is provided over the surface of it in contact with the material which is to be treated, with perforations surrounded by sharp edges (8) outlined across the contour of the said perforations, and that the said fixed perforated cylinder (5) is provided with plain perforations without edges.

2. A machine as in Claim 1, characterized in that a washing distributor (10) lines the upper inner edge of the said tank (1).

3. A machine as in one of the Claims 1 and 2, characterized in that the tank (1) and the aforesaid perforated cylinder (5) are provided with a door (13, 14) located at the height of the rotary tray (3).

4. A machine as in any one of the Claims 1 to 3, characterized in that the aforesaid tank (1) has the shape of a parallelepiped truncated at its base along an oblique plane.

5. A machine as in any one of the Claims 1 to 3, characterized in that the aforesaid tank (1) is a cylinder the conicallyshaped base (1b) of which defines a peripheral duct in which there is arranged at least one window (11) open towards the bottom.

6. A machine as in any one of the Claims 1 to 4, characterized in that the said tank (1) is provided with an inlet for hot water (16).

7. A machine as in the whole of the Claims 1 to 4 and 6, characterized in that the bottom of the tank (1) is open in 10 order to ensure emptying of it.

8. A machine as in the whole of the Claims 1 to 3 and 5, characterized in that the bottom of the tank (1) is domed.

9. A machine as in Claim 8, characterized in that the upper portion of the dome is provided with a washing distributor (9) arranged round the central pivot (4).

10. A machine as in any one of the Claims 1 to 9, characterized in that the diameter of the perforations in the tray (3) lies between 20 and 35 mm.

11. A machine as in any one of the Claims 1 to 10, characterized in that the height of the sharp edges (8) is of the order of 2 mm.

## Ansprüche

1. Vorrichtung zum Enthaaren von Schlachthaus-Tierfellen, die aus einem oben offenen Kessel (1) mit einer waagerechten Scheibe (3), die im unteren Teil des Kessels angebracht ist und durch geeignete Mittel über eine zentrale Drehachse (4) angetrieben wird, und einem feststehenden perforierten Zylinder (5) besteht, welcher mit der Innenwand des Kessels einen Kranzartigen Zwischenraum bildet, der das Austreten der abgerissenen und durch die Zentrifugalkraft in die Öffnungen des Zylinders geschleuderten Haare gewährleistet, dadurch gekennzeichnet, dass die Scheibe (3) an ihrer Oberfläche, die mit den zu behandelnden Materialien in Berührung kommt, mit einer Perforierung versehen ist, die von an den Rändern der Perforierung herausragenden scharfen Kanten (8) umgegeben ist, und dass dieser feststehende perforierte Zylinder (5) mit einer einfachen, kantenlosen Perforierung versehen ist.

2. Vorrichtung gemäss Anspruch 1, dadurch gekennzeichnet, dass der obere Innenrand des Kessels (1) mit einer Waschleitung (10) ausgestattet ist.

3. Vorrichtung gemäss einem der Ansprüche 1 und 2, dadurch gekennzeichnet, dass der Kessel (1) und der perforierte Zylinder (5) in Höhe der drehbaren Scheibe (3) mit einer Tür (13, 14) versehen sind.

4. Vorrichtung gemäß einem der Ansprüche 1 bis 3, dadurch gekennzeichnet, daß der Kessel (1) die Form eines an seiner Basis schräg abgeschnittenen Parallelepipeds hat.

5. Vorrichtung gemäß einem der Ansprüche 1 bis 3, dadurch gekennzeichnet, daß der Kessel (1) ein Zylinder ist, dessen kegelförmige Basis (1b) eine periphere Ableitung bestimmt, in welcher mindestens ein nach unten offenes Fenster (11) angebracht ist.

6. Vorrichtung gemäß einem der Ansprüche 1 bis 4, dadurch gekennzeichnet, daß der Kessel (1) mit einem Warmwasserzulauf (16) versehen ist.

7. Vorrichtung gemäß den Ansprüchen 1 bis 4 und 6, dadurch gekennzeichnet, daß der untere Teil des Kessels (1) offen ist, um dessen Entleerung zu gewährleisten.

8. Vorrichtung gemäß den Ansprüchen 1 bis 3 und 5, dadurch gekennzeichnet, daß der Boden des Kessels (1) ausgebaucht ist.

9. Vorrichtung gemäß Anspruch 8, dadurch gekennzeichnet, daß der obere Teil der Ausbauchung mit einer um die zentrale Drehachse (4) angebrachten Waschleitung (9) versehen ist.

10. Vorrichtung gemäß einem der Ansprüche 1 bis 9, dadurch gekennzeichnet, daß der Durchmesser der Perforierungen der Scheibe (3) zwischen 20 und 35 mm liegt.

11. Vorrichtung gemäß einem der Ansprüche 1 bis 10, dadurch gekennzeichnet, daß die Höhe der scharfen Kanten (8) etwa 2 mm beträgt.

## Fig.1

## Fig.2

Fig:3